# EUROPEAN PATENT APPLICATION

(11) **EP 4 503 455 A1**
(43) Date of publication of application: **05.02.2025**
(21) Application number: 23780640.1
(22) Date of filing: 29.03.2023
(51) Int. Cl.: H04B 3/54, F24F 11/88

(54) **AIR-CONDITIONING-RELATED APPARATUS AND AIR-CONDITIONING SYSTEM**

(30) Priority: 31.03.2022 JP 2022061065
(71) Applicant: DAIKIN INDUSTRIES, LTD., Osaka-shi, Osaka 530-0001 (JP)
(72) Inventor: KODERA, Keita, Osaka-shi, Osaka 530-0001 (JP); HIGASHIYAMA, Shin, Osaka-shi, Osaka 530-0001 (JP); MIURA, Takafusa, Osaka-shi, Osaka 530-0001 (JP); HOTTA, Kosuke, Osaka-shi, Osaka 530-0001 (JP); URATA, Kensuke, Osaka-shi, Osaka 530-0001 (JP); TOK, Chang Wenn, Osaka-shi, Osaka 530-0001 (JP); YAMAMOTO, Ryosuke, Osaka-shi, Osaka 530-0001 (JP); KOYAMA, Yohei, Osaka-shi, Osaka 530-0001 (JP); ISHIZEKI, Shinichi, Osaka-shi, Osaka 530-0001 (JP)
(74) Representative: Hoffmann Eitle
(86) International application number: PCT/JP2023/012717
(87) International publication number: WO 2023/190631

(57) **Abstract**

Air conditioning related equipment includes a communication circuit that is communicably connected via at least two of a communication line through which a communication signal is transmitted, a high-voltage power source line through which high-voltage power is transmitted, and a low-voltage power source line through which low-voltage power is transmitted.

## Description

### Technical Field

The present disclosure relates to air conditioning related equipment and an air conditioning system.

### Background Art

PTL 1 discloses a technique to connect an outdoor unit to an indoor unit with a communication line for signal transmission. PTL 2 discloses an air conditioner that performs communication using an alternating-current power source line. PTL 3 discloses an air conditioner that supplies a direct-current power source to multiple indoor units connected to each other with a communication line.

### Citation List

### Patent Literature

PTL 1: Japanese Patent No. 4165581
PTL 2: Japanese Patent No. 5928423
PTL 3: Japanese Patent No. 4160884

### Summary of Invention

### Technical Problem

It is an object of the present disclosure to provide air conditioning related equipment and an air conditioning system capable of supporting at least two of communication via a communication line through which a communication signal is transmitted, communication via a high-voltage power source line through which high-voltage power is transmitted, and communication via a low-voltage power source line through which low-voltage power is transmitted. Solution to Problem

Air conditioning related equipment according to one aspect of the present disclosure includes a communication circuit that is communicably connected via at least two of a communication line through which a communication signal is transmitted, a high-voltage power source line through which high-voltage power is transmitted, and a low-voltage power source line through which low-voltage power is transmitted.

The air conditioning related equipment according to one aspect of the present disclosure desirably includes a power source circuit that generates driving power of the communication circuit from the high-voltage power and a connection portion to which the communication line is connected. The communication circuit desirably is connected to the connection portion.

The air conditioning related equipment according to one aspect of the present disclosure desirably includes a connection portion to which the low-voltage power source line is connected, a power reception circuit that generates auxiliary power from the low-voltage power to supply the auxiliary power to the communication circuit when the high-voltage power is stopped, and an impedance upper that is disposed between the connection portion and the power reception circuit and that keeps impedance of the connection portion higher than impedance of the power reception circuit across a frequency band of the communication signal. The communication circuit is desirably connected to the connection portion.

The air conditioning related equipment according to one aspect of the present disclosure desirably includes a connection portion to which the high-voltage power source line is connected, a power source circuit that generates driving power of the communication circuit from the high-voltage power, an impedance upper that is disposed between the connection portion and the power source circuit and that keeps impedance of the connection portion higher than impedance of the power source circuit across a frequency band of the communication signal, and an insulation circuit that cuts off the high-voltage power and that transmits the communication signal. The communication circuit is desirably connected to the connection portion via the insulation circuit.

The air conditioning related equipment according to one aspect of the present disclosure desirably includes a connection portion to which the high-voltage power source line is connected, a power source connection portion to which a high-voltage power source is connected, a power source circuit that generates driving power of the communication circuit from the high-voltage power, an impedance upper that is disposed between the connection portion and the power source connection portion and that keeps impedance of the connection portion higher than impedance of the power source connection portion across a frequency band of the communication signal, and an insulation circuit that cuts off the high-voltage power and that transmits the communication signal. The communication circuit is desirably connected to the connection portion via the insulation circuit.

The air conditioning related equipment according to one aspect of the present disclosure desirably includes a first connection portion to which the communication circuit is connected and to which the communication line or the low-voltage power source line is connected, a second connection portion to which the high-voltage power source line is connected, a power source circuit that is connected to the second connection portion and that generates driving power of the communication circuit from the high-voltage power, an impedance upper that is disposed between the second connection portion and the power source circuit and that keeps impedance of the second connection portion higher than impedance of the power source circuit across a frequency band of the communication signal, and an insulation circuit that is disposed between the second connection portion and the communication circuit and that cuts off the high-voltage power and transmits the communication signal.

The air conditioning related equipment according to one aspect of the present disclosure desirably includes a power reception circuit that generates auxiliary power from the low-voltage power and that supplies the auxiliary power to the communication circuit when the high-voltage power is stopped, and an impedance upper that is disposed between the first connection portion and the power reception circuit and that keeps impedance of the first connection portion higher than impedance of the power reception circuit across the frequency band of the communication signal.

In the air conditioning related equipment according to one aspect of the present disclosure, the insulation circuit desirably includes a capacitor.

In the air conditioning related equipment according to one aspect of the present disclosure, the communication circuit desirably performs communication using multiple signals in a frequency division multiplex system.

In the air conditioning related equipment according to one aspect of the present disclosure, the communication circuit desirably performs communication using a signal of a frequency of 100 kHz or higher.

In the air conditioning related equipment according to one aspect of the present disclosure, the high-voltage power source line desirably includes a power source line, a common line, and a signal line. The high-voltage power is desirably transmitted through the power source line and the common line and the communication circuit desirably performs communication via the signal line and the common line.

An air conditioning system according to one aspect of the present disclosure desirably includes the first air conditioning related equipment described above and second air conditioning related equipment that is connected to the first air conditioning related equipment via the communication line. The first air conditioning related equipment desirably communicates with the second air conditioning related equipment via the communication line.

An air conditioning system according to one aspect of the present disclosure desirably includes the first air conditioning related equipment described above and second air conditioning related equipment that is connected to the first air conditioning related equipment via the low-voltage power source line. The first air conditioning related equipment desirably communicates with the second air conditioning related equipment via the low-voltage power source line.

An air conditioning system according to one aspect of the present disclosure desirably includes the first air conditioning related equipment described above and second air conditioning related equipment that is connected to the first air conditioning related equipment via the high-voltage power source line. The first air conditioning related equipment desirably communicates with the second air conditioning related equipment via the high-voltage power source line.

An air conditioning system according to one aspect of the present disclosure desirably includes the first air conditioning related equipment described above, second air conditioning related equipment that is connected to the first air conditioning related equipment via the high-voltage power source line, and third air conditioning related equipment that is connected to the first air conditioning related equipment via the low-voltage power source line. The first air conditioning related equipment desirably communicates with the second air conditioning related equipment via the high-voltage power source line and desirably communicates with the third air conditioning related equipment via the low-voltage power source line.

According to the present disclosure, it is possible to support at least two of communication via the communication line through which the communication signal is transmitted, communication via the high-voltage power source line through which the high-voltage power is transmitted, and communication via the low-voltage power source line through which the low-voltage power is transmitted.

### Brief Description of Drawings

[Fig. 1] Fig. 1 is a block diagram schematically illustrating the configuration of an indoor unit according to a first embodiment.
[Fig. 2] Fig. 2 is a block diagram illustrating an example of the configuration of the indoor unit according to the first embodiment.
[Fig. 3A] Fig. 3A is a circuit diagrams illustrating an example of the configuration of a filter circuit.
[Fig. 3B] Fig. 3B is a circuit diagrams illustrating an example of the configuration of a filter circuit.
[Fig. 4] Fig. 4 is a schematic diagram illustrating a first connection example of the indoor unit and an outdoor unit according to the first embodiment.
[Fig. 5] Fig. 5 is a schematic diagram illustrating a second connection example of the indoor unit and an outdoor unit according to the first embodiment.
[Fig. 6] Fig. 6 is a schematic diagram illustrating a third connection example of the indoor unit and the outdoor unit according to the first embodiment.
[Fig. 7] Fig. 7 is a schematic diagram illustrating a fourth connection example of the indoor unit and the outdoor units according to the first embodiment.
[Fig. 8] Fig. 8 is a block diagram illustrating an example of the configuration of an outdoor unit according to a second embodiment.
[Fig. 9] Fig. 9 is a schematic diagram illustrating an example of the configuration of an indoor unit and the outdoor unit according to a third embodiment.
[Fig. 10] Fig. 10 is a schematic diagram illustrating an example of the configuration of an indoor unit and the outdoor unit according to a fourth embodiment.
[Fig. 11] Fig. 11 is a schematic diagram illustrating an example of the configuration of an indoor unit and the outdoor unit according to a fifth embodiment.

### Description of Embodiments

Pieces of air conditioning related equipment and air conditioning systems according to embodiments of the present disclosure will herein be described with reference to the drawings.

### (First embodiment)

### <Configuration of indoor unit (air conditioning related equipment)>

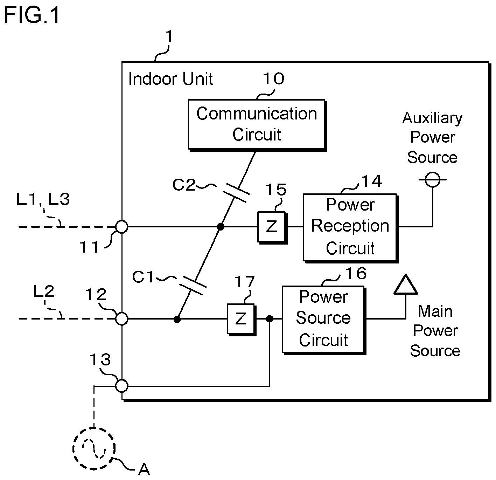

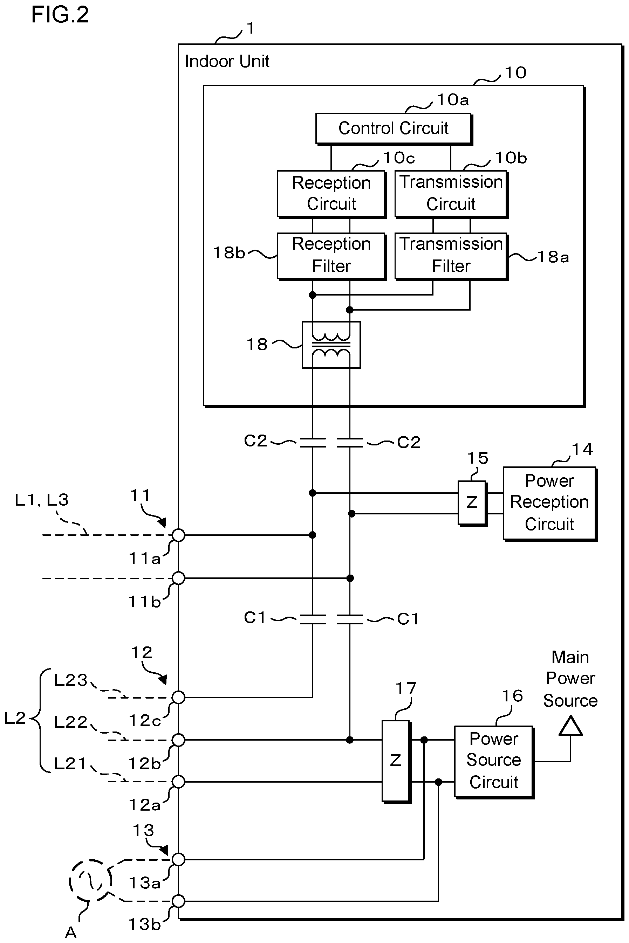

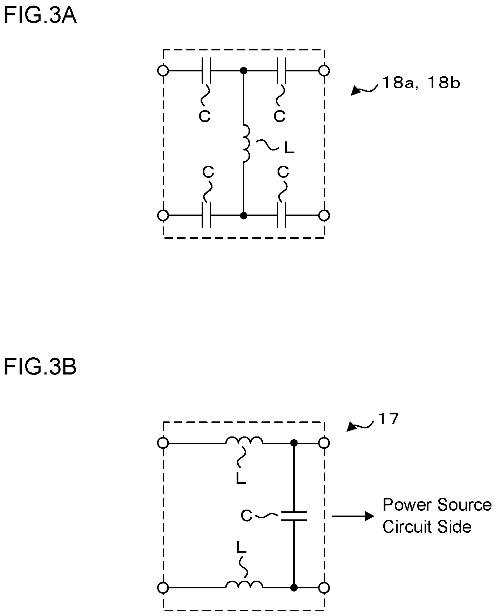

Fig. 1 is a block diagram schematically illustrating the configuration of an indoor unit 1 according to a first embodiment. Fig. 2 is a block diagram illustrating an example of the configuration of the indoor unit 1 according to the first embodiment. Fig. 3A and Fig. 3B are circuit diagrams illustrating examples of the configurations of filter circuits. The indoor unit 1 according to the first embodiment is air conditioning related equipment capable of communicating with external air conditioning related equipment via one or two wiring lines of a communication line L1 through which a communication signal is transmitted, a high-voltage power source line L2 through which high-voltage power is transmitted, and a low-voltage power source line L3 through which low-voltage power is transmitted. A communication system in which pieces of air conditioning related equipment are connected with the communication line L1, the high-voltage power source line L2, or the low-voltage power source line L3 is referred to as an air conditioning system.

The communication line L1 is a wiring line that is intended for transmission of the communication signal and that is not intended for power transmission. The communication line L1 includes two electric wires as transmission media of a differential signal. The communication line L1 is a two-core vinyl cabtire round cord (VCTF) .

The high-voltage power source line L2 is a wiring line through which high-voltage power necessary to operate a driving system, such as a refrigerant circuit, is transmitted and through which the communication signal is transmitted. The high-voltage power source line L2 includes a power source line L21, a common line L22, and a signal line L23. The common line L22 is, for example, an electric wire connected to reference potential. For example, the common line L22 is an electric wire grounded to 0 V. The power source line L21 is an electric wire for transmitting the high-voltage power. The signal line L23 is an electric wire for communication between the pieces of the air conditioning related equipment. The indoor unit 1 transmits the high-voltage power via the power source line L21 and the common line L22 and performs communication via the common line L22 and the signal line L23.

The low-voltage power source line L3 is a wiring line through which power necessary to operate a control system is transmitted and through which the communication signal is transmitted. The low-voltage power source line L3 includes two electric wires as transmission media of the low-voltage power and the differential signal. The physical configuration of the low-voltage power source line L3 is the same as that of the communication line L1.

The indoor unit 1 according to the first embodiment includes a communication circuit 10, a first connection portion 11, a second connection portion 12, a third connection portion 13, a power reception circuit 14, a first impedance upper 15, a power source circuit 16, and a second impedance upper 17.

The first connection portion 11 is a connection terminal to which the communication line L1 or the low-voltage power source line L3 is connected. The first connection portion 11 is connected to the communication circuit 10 via a low-voltage cut-off capacitor C2. The first connection portion 11 is connected to the power reception circuit 14 via the first impedance upper 15.

Specifically, the first connection portion 11 includes two terminals 11a and 11b to which the two electric wires composing the low-voltage power source line L3 and the communication line L1 are respectively connected. Internal wiring lines are connected to the two terminals 11a and 11b, and the two terminals 11a and 11b are connected to a transmission circuit 10b and a reception circuit 10c via the capacitor C2 with the internal wiring lines. The internal wiring lines are connected to the two terminals 11a and 11b, and the terminals 11a and 11b are connected to the power reception circuit 14 via the first impedance upper 15 with the internal wiring lines.

The first connection portion 21 may include two or more pairs of the terminals 11a and 11b for connection to other pieces of air conditioning related equipment in a daisy chain method. The corresponding terminals are connected to each other.

The power reception circuit 14 is a circuit that receives the low-voltage power supplied from external air conditioning related equipment through the low-voltage power source line L3 and that supplies auxiliary power to various circuits in the indoor unit 1, which is the own unit. The power reception circuit 14 is capable of receiving the low-voltage power and supplying the received power to the communication circuit 10 even if supply of the high-voltage power is stopped.

The first impedance upper 15 is a circuit that is disposed between the first connection portion 11 and the power reception circuit 14 and that keeps the impedance of the first connection portion 11 higher than the impedance of the power reception circuit 14 across a frequency band of the communication signal. The first impedance upper 15 is, for example, a low-pass filter and removes the communication signal and supplies only the low-voltage power to the power reception circuit 14.

The second connection portion 12 is a connection terminal to which the high-voltage power source line L2 is connected. The second connection portion 12 is connected to the power source circuit 16 via the second impedance upper 17. The second connection portion 12 is connected to the communication circuit 10 via a high-voltage cut-off capacitor C1 (an insulation circuit) and the capacitor C2. The second connection portion 12 is connected to the first connection portion 11 via the capacitor C1.

Specifically, the second connection portion 12 includes a terminal 12a to which the power source line L21 of the high-voltage power source line L2 is connected, a terminal 12b to which the common line L22 is connected, and a terminal 12c to which the signal line L23 is connected. The terminal 12a and the terminal 12b are connected to the power source circuit 16 via the second impedance upper 17. The terminal 12b and the terminal 12c are connected to the capacitor C1.

The second connection portion 22 may include two or more pairs of the terminals 12a, 12b, and 12c for connection to other pieces of air conditioning related equipment in the daisy chain method. The corresponding terminals are connected to each other.

The second impedance upper 17 is a circuit that keeps the impedances of the terminals 12a and 12b higher than the impedance of the power source circuit 16 across the frequency band of the communication signal. The second impedance upper 17 is, for example, a low-pass filter circuit illustrated in Fig. 3B. The low-pass filter illustrated in Fig. 3B is an L-shaped filter circuit. The low-pass filter includes inductors L respectively connected in series to two communication paths and a capacitor C connected in parallel to the two communication paths.

The capacitor C1 is a circuit that is disposed between the second connection portion 12, and the communication circuit 10 and the first connection portion 11 and that cuts off the high-voltage power and transmits the communication signal.

The third connection portion 13 is a connection terminal to which an alternating-current power source A is connected. The third connection portion 13 includes two terminals 13a and 13b. Internal power source lines are connected to the two terminals 13a and 13b, and the terminals 13a and 13b are connected to the power source circuit 16 with the internal power source lines. The two terminals 13a and 13b are connected to the terminals 12a and 12b of the second connection portion 12 via the second impedance upper 17. A noise filter may be provided between the third connection portion 13 and the power source circuit 16.

The power source circuit 16 is, for example, a switching power source circuit. The power source circuit 16 receives alternating-current power supplied from the alternating-current power source A or external air conditioning related equipment and supplies main power to various devices in the indoor unit 1, which is the own unit. The power source circuit 16 is a main power source and generates driving power for the communication circuit 10 to supply the generated driving power to the communication circuit 10.

The communication circuit 10 is a circuit that performs frequency division multiplex communication. Specifically, the communication circuit 10 includes a control circuit 10a, a transmission circuit 10b that transmits a signal modulated in the frequency division multiplex system in a band of 2 MHz to 28 MHz, and a reception circuit 10c that receives the signal modulated in the frequency division multiplex system in the same frequency band. The communication circuit 10 includes a transmission filter 18a, a reception filter 18b, and a noise filter 18. The communication circuit 10 is capable of broadband communication using a high frequency band and is capable of multicarrier communication using the signal in the frequency division multiplex system. The communication circuit 10 is capable of high-speed high-capacity communication.

The following communication protocols are used in the communication circuit 10. A communication protocol in the frequency division multiplex system and the Ethernet (registered trademark) are used as physical-datalink layers. User Datagram Protocol (UDP) is used as a transport layer protocol, and Internet Protocol Version 6 (IPv6) is used as a network layer protocol. Constrained Application Protocol (CoAP) is used as an application protocol, and Concise Binary Object Representation (CBOR) is used as a serialization format.

UDP is preferable for the indoor unit 1 and the air conditioning system according to the present embodiment. Since connection is not established, unlike Transmission Control Protocol (TPC), even when multiple pieces of air conditioning related equipment are connected, random access memories (RAMs) in the pieces of air conditioning related equipment are not overloaded.

IPv6 is preferable for the indoor unit 1 and the air conditioning system according to the present embodiment. Multiple pieces of air conditioning related equipment are capable of being identified with Internet protocol (IP) addresses having common specifications for communication.

CoAP is preferable for the indoor unit 1 and the air conditioning system according to the present embodiment. Since binary communication is performed, light communication is enabled, compared with Hyper Text Transfer Protocol (HTTP). The correspondence between requests and responses is established and retransmission of data is enabled when the request fails. Acquisition and update of data concerning control, the operation state, and so on are capable of being performed between the pieces of air conditioning related equipment using a GET command and a SET command.

CBOR is preferable for the indoor unit 1 and the air conditioning system according to the present embodiment. Since the binary communication is performed, light communication is enabled, compared with JavaScript Object Notation (JSON) or the like. Data is capable of being tagged to give meaning to data transmitted and received between the pieces of air conditioning related equipment.

A combination of the above protocols is most preferable for the indoor unit 1 and the air conditioning system according to the present embodiment.

The transmission circuit 10b in the communication circuit 10 is connected to the second connection portion 12 via the transmission filter 18a, the noise filter 18, and the capacitors C1 and C2. The transmission circuit 10b is connected to the first connection portion 11 via the transmission filter 18a, the noise filter 18, and the capacitor C2. The reception circuit 10c in the communication circuit 10 is connected to the second connection portion 12 via the reception filter 18b, the noise filter 18, and the capacitors C1 and C2. The reception circuit 10c is connected to the first connection portion 11 via the reception filter 18b, the noise filter 18, and the capacitor C2. The communication circuit 10 is capable of communicating with external air conditioning related equipment via the high-voltage power source line L2 connected to the second connection portion 12 and is capable of communicating with external air conditioning related equipment via the communication line L1 or the low-voltage power source line L3 connected to the first connection portion 11.

The noise filter 18 is a transformer that transmits the differential signal and that cuts off common mode noise. Both terminals of a first coil composing the transformer are respectively connected to the terminals 12b and 12c of the second connection portion 12 via the capacitors C1 and C2. Both terminals of the first coil are respectively connected to the terminals 11b and 11c of the first connection portion 11 via the capacitor C2. Both terminals of a second coil composing the noise filter 18 are connected to the transmission circuit 10b via the transmission filter 18a. Both terminals of the second coil composing the noise filter 18 are connected to the reception circuit 10c via the reception filter 18b. The transmission filter 18a and the reception filter 18b are filter circuits that transmit signal components transmitted and received between the pieces of air conditioning related equipment and that cut off non-signal components. The transmission filter 18a and the reception filter 18b are each desirably configured as a high-pass filter illustrated in Fig. 3A. The high-pass filter illustrated in Fig. 3A is a T-shaped filter circuit. The high-pass filter includes two capacitors C connected in series to a first communication path, two capacitors C connected in series to a second communication circuit, and an inductor L connected in parallel between nodes of the capacitors C on the respective paths. The transmission filter 18a and the reception filter 18b may be bandpass filter circuits.

The control circuit 10a is a circuit that controls transmission and reception of the signals by the transmission circuit 10b and the reception circuit 10c to control the operation of the indoor unit 1. The control apparatus includes an arithmetic processing unit that executes control programs and a storage unit. The arithmetic processing unit includes, for example, a central processing unit (CPU) or a micro processing unit (MPU). The storage unit stores information used for the control programs and a control process. The storage unit includes a non-volatile memory and a volatile memory.

### <Other components in the indoor unit 1>

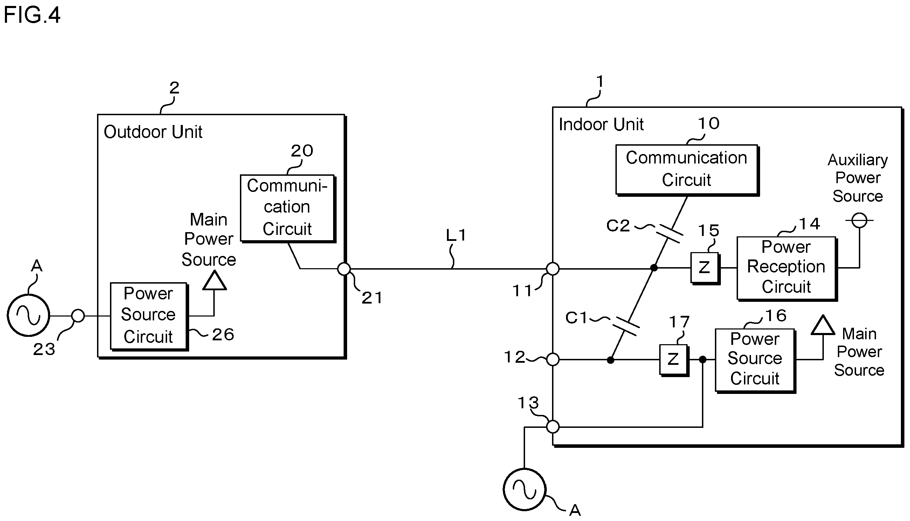

The indoor unit 1 and an outdoor unit 2 (refer to Fig. 4) each include an indoor unit composing a refrigerant circuit (not illustrated) and an outdoor unit. The indoor unit and the outdoor unit are connected to each other via a refrigerant pipe and a shutoff valve. The outdoor unit includes a compressor that sucks in and compresses refrigerant to discharge the refrigerant, a four-way switching valve provided in the refrigerant pipe, an outdoor heat exchanger, an expansion mechanism that decompresses the refrigerant, and so on. The expansion mechanism is, for example, an expansion valve, a capillary tube, or the like. The indoor unit includes an indoor heat exchanger and so on.

### <Connection example using communication line L1>

Fig. 4 is a schematic diagram illustrating a first connection example of the indoor unit 1 and the outdoor unit 2 according to the first embodiment. The outdoor unit 2 includes a communication circuit 20, a first connection portion 21, a third connection portion 23, and a power source circuit 26. The first connection portion 21 is a connection terminal to which the communication line L1 is connected. The first connection portion 21 is connected to the communication circuit 20. The communication circuit 20 is a circuit that performs the frequency division multiplex communication. The configuration of the communication circuit 20 is the same as that of the communication circuit 10 in the indoor unit 1, and the communication circuit 20 is capable of communication using the same communication protocol as that of the communication circuit 10. The third connection portion 23 is a connection terminal to which the alternating-current power source A is connected. The third connection portion 23 is connected to the power source circuit 26. The power source circuit 26 receives the alternating-current power supplied from the alternating-current power source A connected to the third connection portion 23 and supplies the main power to various devices in the outdoor unit 2, which is the own unit.

As illustrated in Fig. 4, the indoor unit 1 according to the first embodiment is capable of being connected to the outdoor unit 2 via the communication line L1 and is capable of transmitting and receiving the signal via the communication line L1. Specifically, one end of the communication line L1 is connected to the first connection portion 11 of the indoor unit 1 and the other end of the communication line L1 is connected to the first connection portion 21 of the outdoor unit 2. The communication signal transmitted by the communication circuit 10 is transmitted to the outdoor unit 2 through the capacitor C2, the first connection portion 11, and the communication line L1. The communication signal transmitted from the outdoor unit 2 through the communication line L1 is input into the communication circuit 10 through the first connection portion 11 and the capacitor C2.

### <Connection example using high-voltage power source line L2>

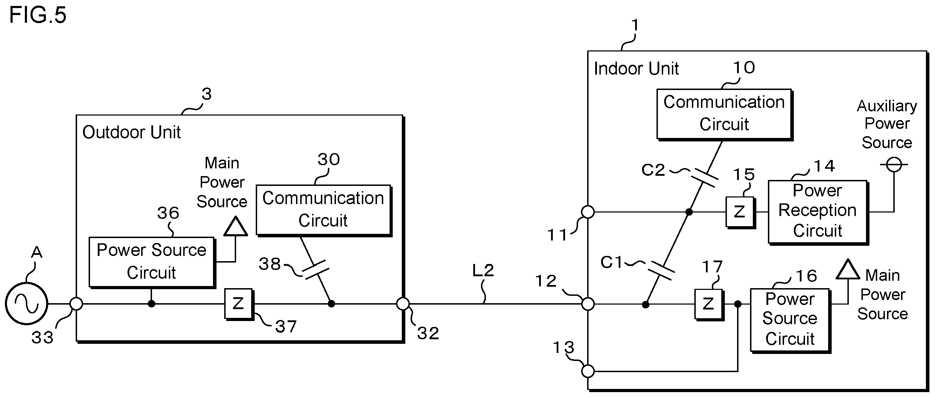

Fig. 5 is a schematic diagram illustrating a second connection example of the indoor unit 1 and an outdoor unit 3 according to the first embodiment. The outdoor unit 3 includes a communication circuit 30, a second connection portion 32, a third connection portion 33, a power source circuit 36, an impedance upper 37, and an insulation circuit 38. The second connection portion 32 is a connection terminal to which the high-voltage power source line L2 is connected. The second connection portion 32 is connected to the communication circuit 30 via the insulation circuit 38. In addition, the second connection portion 32 is connected to the third connection portion 33 and the power source circuit 36 via the impedance upper 37. The communication circuit 30 is a circuit that performs the frequency division multiplex communication. The configuration of the communication circuit 30 is the same as that of the communication circuit 10 in the indoor unit 1, and the communication circuit 30 is capable of communication using the same communication protocol as that of the communication circuit 10. The third connection portion 33 is a connection terminal to which the alternating-current power source A is connected. The third connection portion 33 is connected to the power source circuit 36. The power source circuit 36 receives the alternating-current power supplied from the alternating-current power source A connected to the third connection portion 33 and supplies the main power to various devices in the outdoor unit 3, which is the own unit.

As illustrated in Fig. 5, the indoor unit 1 according to the first embodiment is capable of being connected to the outdoor unit 3 via the high-voltage power source line L2 and is capable of transmitting and receiving the signal via the high-voltage power source line L2. Specifically, one end of the high-voltage power source line L2 is connected to the second connection portion 12 of the indoor unit 1 and the other end of the high-voltage power source line L2 is connected to the second connection portion 32 of the outdoor unit 3. The communication signal transmitted by the communication circuit 10 is transmitted to the outdoor unit 3 through the capacitors C1 and C2, the second connection portion 12, and the high-voltage power source line L2. The communication signal transmitted from the outdoor unit 3 through the high-voltage power source line L2 is input into the communication circuit 10 through the second connection portion 12 and the capacitors C1 and C2.

The outdoor unit 3 supplies the high-voltage power to the indoor unit 1 via the high-voltage power source line L2. The high-voltage power supplied from the outdoor unit 3 through the high-voltage power source line L2 is input into the power source circuit 16 from the second connection portion 12 of the indoor unit 1 through the second impedance upper 17. The indoor unit 1 is capable of receiving the high-voltage power supplied from the outdoor unit 3.

### <Connection example using low-voltage power source line L3>

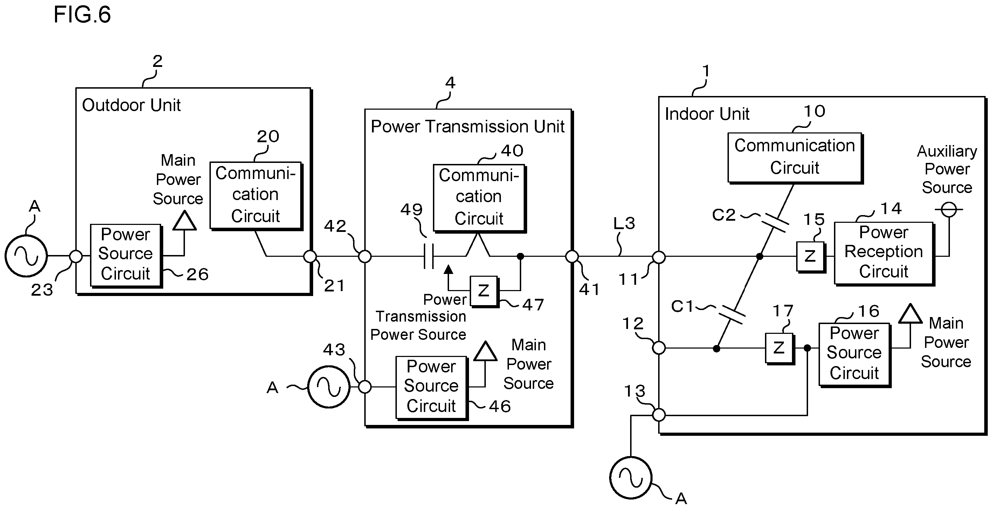

Fig. 6 is a schematic diagram illustrating a third connection example of the indoor unit 1 and the outdoor unit 2 according to the first embodiment. The indoor unit 1 is connected to the outdoor unit 2 via a power transmission unit 4.

The outdoor unit 2 includes the communication circuit 20, the first connection portion 21, the third connection portion 23, and the power source circuit 26. This circuit configuration is the same as or similar to the circuit configuration of the outdoor unit 2 described above with reference to Fig. 4.

The power transmission unit 4 is a unit that supplies the low-voltage power. The power transmission unit 4 includes a communication circuit 40, a first connection portion 41, a second connection portion 42, a third connection portion 43, a power source circuit 46, an impedance upper 47, and a capacitor 49.

The first connection portion 41 and the second connection portion 42 are connection terminals to which the low-voltage power source line L3 is connected. The first connection portion 41 is connected to the communication circuit 40. The second connection portion 42 is connected to the communication circuit 40 via the capacitor 49. The communication circuit 40 is connected to the first connection portion 41 and the second connection portion 42 in the daisy chain method.

The power transmission unit 4 includes a low-voltage supplying power source circuit that supplies the low-voltage power. The low-voltage supplying power source circuit is connected to the first connection portion 41 via the impedance upper 47. The low-voltage supplying power source circuit supplies the low-voltage power to the low-voltage power source line L3 connected to the first connection portion 41.

The third connection portion 43 is a connection terminal to which the alternating-current power source A is connected. The third connection portion 43 is connected to the power source circuit 46. The power source circuit 46 receives the alternating-current power supplied from the alternating-current power source A connected to the third connection portion 43 and supplies the main power to various devices in the power transmission unit 4, which is the own unit.

As illustrated in Fig. 6, the indoor unit 1 according to the first embodiment is capable of being connected to the outdoor unit 2 via the low-voltage power source line L3 and is capable of transmitting and receiving the signal via the low-voltage power source line L3. Specifically, one end of a first low-voltage power source line L3 is connected to the first connection portion 11 of the indoor unit 1 and the other end of the low-voltage power source line L3 is connected to the first connection portion 41 of the power transmission unit 4. One end of a second low-voltage power source line L3 is connected to the second connection portion 42 of the power transmission unit 4 and the other end of the low-voltage power source line L3 is connected to the first connection portion 21 of the outdoor unit 2. The communication signal transmitted by the communication circuit 10 is transmitted to the outdoor unit 2 through the capacitor C2, the first connection portion 11, the first low-voltage power source line L3, the power transmission unit 4, and the second low-voltage power source line L3. The communication signal transmitted from the outdoor unit 2 through the communication line L1 is input into the communication circuit 10 through the first connection portion 11 and the capacitor C2.

The low-voltage power supplied from the power transmission unit 4 through the low-voltage power source line L3 is input into the power reception circuit 14 from the first connection portion 11 of the indoor unit 1 through the first impedance upper 15. The indoor unit 1 is capable of receiving the low-voltage power with the power reception circuit 14.

### <Connection example using high-voltage power source line L2 and low-voltage power source line L3>

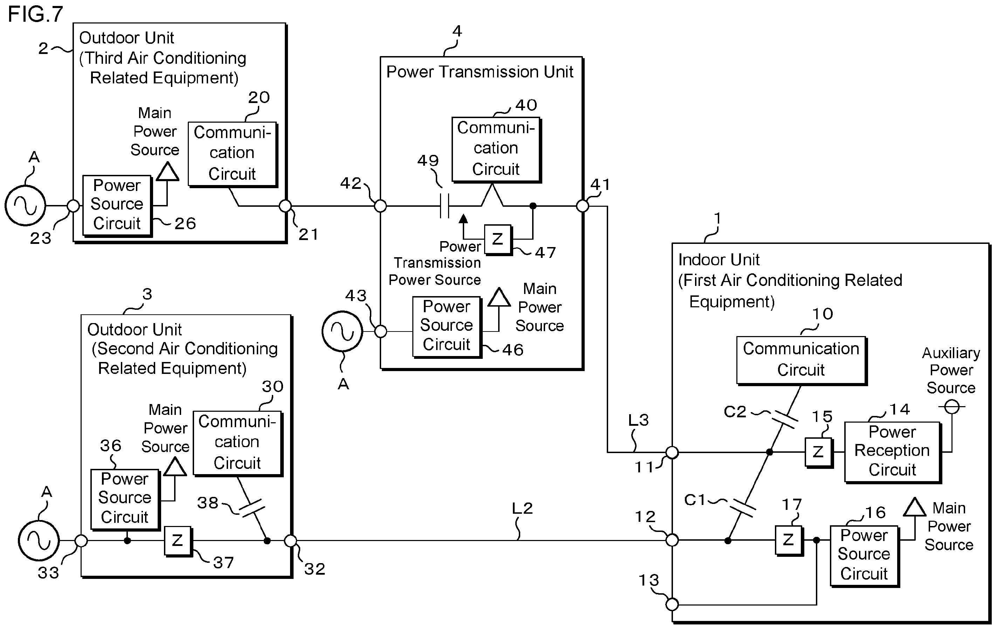

Fig. 7 is a schematic diagram illustrating a fourth connection example of the indoor unit 1 and the outdoor units 2 and 3 according to the first embodiment. The indoor unit 1 is connected to the outdoor unit 3 via the high-voltage power source line L2 and is connected to the outdoor unit 2 via the low-voltage power source line L3. The configuration of the outdoor unit 3 illustrated in Fig. 7 is the same as or similar to that of the outdoor unit 3 illustrated in Fig. 5. The configurations of the outdoor unit 2 and the power transmission unit 4 illustrated in Fig. 7 are the same as or similar to the configurations of the outdoor unit 2 and the power transmission unit 4 illustrated in Fig. 6.

One end of the high-voltage power source line L2 is connected to the second connection portion 12 of the indoor unit 1 and the other end of the high-voltage power source line L2 is connected to the second connection portion 32 of the outdoor unit 3.

One end of the first low-voltage power source line L3 is connected to the first connection portion 11 of the indoor unit 1 and the other end of the low-voltage power source line L3 is connected to the first connection portion 41 of the power transmission unit 4. One end of the second low-voltage power source line L3 is connected to the second connection portion 42 of the power transmission unit 4 and the other end of the low-voltage power source line L3 is connected to the first connection portion 21 of the outdoor unit 2.

As illustrated in Fig. 7, the indoor unit 1 according to the first embodiment is capable of being connected to the outdoor unit 3 via the high-voltage power source line L2 and is capable of being connected to the outdoor unit 2 via the low-voltage power source line L3. The indoor unit 1 is capable of communicating with the outdoor unit 2 via the low-voltage power source line L3 and is capable of communicating with the outdoor unit 3 via the high-voltage power source line L2.

As illustrated in Fig. 7, the indoor unit 1 realizes mutual communication of the signals with the high-voltage power source line L2 and the low-voltage power source line L3 through the provision of the capacitor C1 according to the present embodiment. Specifically, the indoor unit 1 realizes the mutual communication of the signals through the provision of the capacitor C1 and the communication circuits 10, 20, and 30, which communicate with each other with a common communication protocol using the frequency division multiplex communication method.

The functions of the air conditioning related equipment enabling the mutual communication are as follows:
(1) The indoor unit 1 is capable of connection to all of a communication network using the high-voltage power source line L2, a communication network using the low-voltage power source line L3, and a communication network using the communication line L1.
(2) The indoor unit 1 is capable of connection by the daisy chain method using the high-voltage power source line L2 and the low-voltage power source line L3, and the respective pieces of air conditioning related equipment are capable of directly exchanging the signal via the high-voltage power source line L2 and the low-voltage power source line L3. In the example illustrated in Fig. 7, the outdoor unit 2 and the outdoor unit 3 are capable of directly transmitting and receiving the signal via the high-voltage power source line L2 and the low-voltage power source line L3.
(3) The indoor unit 1 is capable of communication using a common communication protocol regardless of the kind and the system of the communication network.

### <Effects and advantages>

With the indoor unit 1 and the air conditioning system according to the present embodiment, the indoor unit 1 is capable of being connected to all of the communication line L1, the high-voltage power source line L2, and the low-voltage power source line L3 to communicate with external air conditioning related equipment.

Since the communication circuit 10 in the indoor unit 1 is connected to the high-voltage power source line L2 via the high-voltage cut-off capacitor C1, the indoor unit 1 is capable of communication via the high-voltage power source line L2.

The communication circuit 10 in the indoor unit 1 is connected to the low-voltage power source line L3 not via the high-voltage cut-off capacitor C1 but via the low-voltage cut-off capacitor C2. The indoor unit 1 is capable of communication via the low-voltage power source line L3.

The indoor unit 1 is capable of receiving the high-voltage power supplied from another piece of air conditioning related equipment via the high-voltage power source line L2 for operation.

The indoor unit 1 is capable of receiving the low-voltage power supplied from another piece of air conditioning related equipment via the low-voltage power source line L3 for operation.

The indoor unit 1 is capable of supplying the high-voltage power to another piece of air conditioning related equipment via the high-voltage power source line L2.

The indoor unit 1 is capable of being connected to a communication network including the high-voltage power source line L2 and a communication network including the low-voltage power source line L3 or the communication line L1 so as to enable the mutual communication of the signals.

Since the indoor unit 1 includes the high-voltage cut-off capacitor C1 provided between the first connection portion 11 to which the communication line L1 or the low-voltage power source line L3 is connected and the second connection portion 12 to which the high-voltage power source line L2 is connected, the mutual communication of the signals with the high-voltage power source line L2 and the low-voltage power source line L3 is enabled.

The communication circuits 10 in the indoor unit 1 and the outdoor unit 2 are capable of performing the frequency division multiplex communication. The broadband communication and the multicarrier communication of the signal in the frequency division multiplex system are enabled in the high-frequency band of 2 MHz to 28 MHz. The indoor unit 1 and the outdoor unit 2 are capable of performing the high-speed high-capacity communication.

Since the communication is performed in the high-frequency band, the pieces of air conditioning related equipment that are normally connected to each other via the wiring lines are capable of relatively stably continuing the communication even if any failure occurs on part of the communication paths.

Since high-speed communication is enabled, the air conditioning related equipment is capable of transmitting and receiving information other than control data about the air conditioning system. For example, the air conditioning related equipment is capable of transmitting and receiving information about maintenance and inspection.

Since the common protocol is used for the communication via the communication line L1, the communication via the high-voltage power source line L2, and the communication via the low-voltage power source line L3, the communication circuit 10 in the indoor unit 1 and the communication circuit 20 in the outdoor unit 2 are capable of communicating with the pieces of air conditioning related equipment that are mutually connected using a common communication protocol.

The high-voltage cut-off insulation circuit is capable of being configured by the simple circuit composed of the capacitor C1.

The air conditioning related equipment is capable of transmitting and receiving the signal using the common line L22, which is one lead wire for transmitting the high-voltage power, and the signal line L23. The air conditioning related equipment is capable of using the high-voltage power source line L2 as an electric wire for communication.

Although the indoor unit 1 is exemplified as the air conditioning related equipment according to the first embodiment, the first embodiment may be applied to various devices concerning the air conditioning, such as the outdoor unit 2, a refrigerant switching apparatus, a power transmission unit, a ventilation apparatus, a remote controller, a communication apparatus, and a control apparatus.

### (Second embodiment)

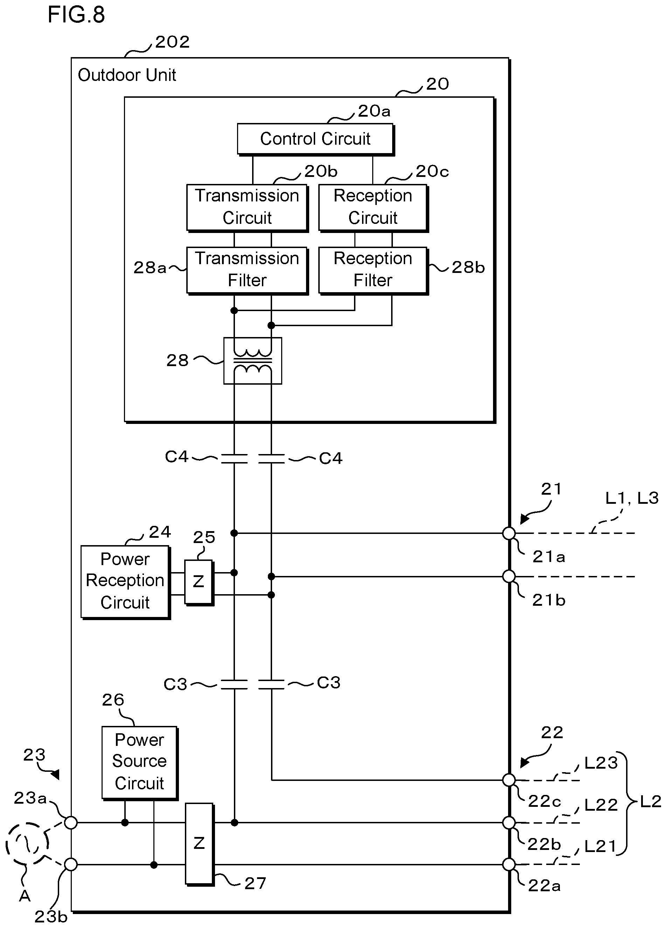

Fig. 8 is a block diagram illustrating an example of the configuration of an outdoor unit 202 according to a second embodiment. The outdoor unit 202 according to the second embodiment includes the communication circuit 20, the first connection portion 21, a second connection portion 22, the third connection portion 23, a power reception circuit 24, a first impedance upper 25, the power source circuit 26, and a second impedance upper 27. Since the circuit configuration concerning the communication and the power transmission is the same as the circuit configuration of the indoor unit 1, a detailed description of the circuit configuration of the outdoor unit 202 is appropriately omitted herein.

The first connection portion 21 is a connection terminal to which the communication line L1 or the low-voltage power source line L3 is connected. The first connection portion 21 includes two terminals 21a and 21b to which the two electric wires composing the low-voltage power source line L3 and the communication line L1 are respectively connected. The first connection portion 21 is connected to the communication circuit 20 via a low-voltage cut-off capacitor C4. The first connection portion 21 is connected to the power reception circuit 24 via the first impedance upper 25.

The power reception circuit 24 is a circuit that receives the low-voltage power supplied from external air conditioning related equipment via the low-voltage power source line L3 and that supplies the auxiliary power to various circuits in the outdoor unit 202, which is the own unit.

The first impedance upper 25 is a circuit that is disposed between the first connection portion 21 and the power reception circuit 24 and that keeps the impedance of the first connection portion 21 higher than the impedance of the power reception circuit 24 across the frequency band of the communication signal.

The second connection portion 22 is a connection terminal to which the high-voltage power source line L2 is connected. The second connection portion 22 is connected to the power source circuit 26 via the second impedance upper 27. The second connection portion 22 is connected to the communication circuit 20 via a high-voltage cut-off capacitor C3 (an insulation circuit) and the low-voltage cut-off capacitor C4.

Specifically, the second connection portion 22 includes a terminal 22a to which the power source line L21 of the high-voltage power source line L2 is connected, a terminal 22b to which the common line L22 is connected, and a terminal 22c to which the signal line L23 is connected. The terminals 22a and 22b are connected to the power source circuit 26 via the second impedance upper 27. The terminals 22b and 22c are connected to the high-voltage cut-off capacitor C3.

The second impedance upper 27 is a circuit that keeps the impedances of the terminals 22a and 22b higher than the impedance of the power source circuit 26 across the frequency band of the communication signal.

The capacitor C3 is a circuit that is disposed between the second connection portion 22, and the communication circuit 20 and the first connection portion 21 and that cuts off the high-voltage power and transmits the communication signal.

The third connection portion 23 is a connection terminal to which the alternating-current power source A is connected. The third connection portion 23 includes two terminals 23a and 23b. Internal power source lines are connected to the two terminals 23a and 23b, and the terminals 23a and 23b are connected to the power source circuit 26 with the internal power source lines. The two terminals 23a and 23b are connected to the terminals 22a and 22b of the second connection portion 22 via the second impedance upper 27.

The power source circuit 26 receives the alternating-current power supplied from the alternating-current power source A or external air conditioning related equipment and supplies the main power to various devices in the outdoor unit 202, which is the own unit.

The communication circuit 20 includes a control circuit 20a, a transmission circuit 20b, a reception circuit 20c, a transmission filter 28a, a reception filter 28b, and a noise filter 28. The transmission circuit 20b, the reception circuit 20c, the transmission filter 28a, the reception filter 28b, and the noise filter 28 perform the frequency division multiplex communication. The configurations of the respective circuits and filters are the same as those of the circuits and filters in the indoor unit 1 of the first embodiment.

The communication circuit 20 is connected to the second connection portion 22 via the capacitors C3 and C4. The communication circuit 20 is connected to the first connection portion 21 via the capacitor C4. The communication circuit 20 is capable of communicating with external air conditioning related equipment via the high-voltage power source line L2 connected to the second connection portion 22 and is capable of communicating with external air conditioning related equipment via the communication line L1 or the low-voltage power source line L3, which is connected to the first connection portion 21.

According to the second embodiment, the outdoor unit 202 is capable of being connected to all of the communication line L1, the high-voltage power source line L2, and the low-voltage power source line L3 to communicate with external air conditioning related equipment.

### (Third embodiment)

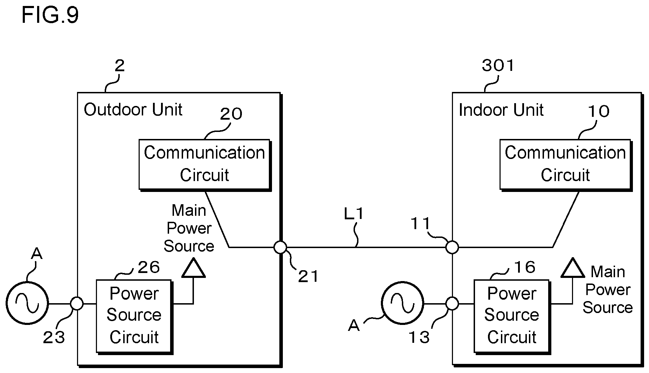

Fig. 9 is a schematic diagram illustrating an example of the configuration of an indoor unit 301 and the outdoor unit 2 according to a third embodiment. As described in the first embodiment, the common communication protocol is used for the communication via the communication line L1, the communication via the high-voltage power source line L2, and the communication via the low-voltage power source line L3. Accordingly, providing one communication circuit 10 commonly used for multiple kinds of air conditioning related equipment and appropriately selecting necessary peripheral circuits enable the indoor unit 301 that performs communication only via the communication line L1 to be configured. Since the detailed configuration of the circuits composing the indoor unit 301 is the same as or similar to that in the first embodiment, a detailed description of the circuits composing the indoor unit 301 is omitted herein.

The indoor unit 301 according to the third embodiment includes the communication circuit 10, the first connection portion 11, the third connection portion 13, and the power source circuit 16. The configuration of the outdoor unit 2 is the same as or similar to the circuit configuration of the outdoor unit 2 described above with reference to Fig. **4****.** The first connection portion 11 of the indoor unit 301 is connected to the first connection portion 21 of the outdoor unit 2 via the communication line L1.

According to the third embodiment, the indoor unit 301 is capable of communicating with the outdoor unit 2 via the communication line L1. It is not necessary to provide a dedicated circuit for realizing the communication via the communication line L1, and it is possible to compose the indoor unit 301 according to the third embodiment using the communication circuit 10 having the common specifications.

### (Fourth embodiment)

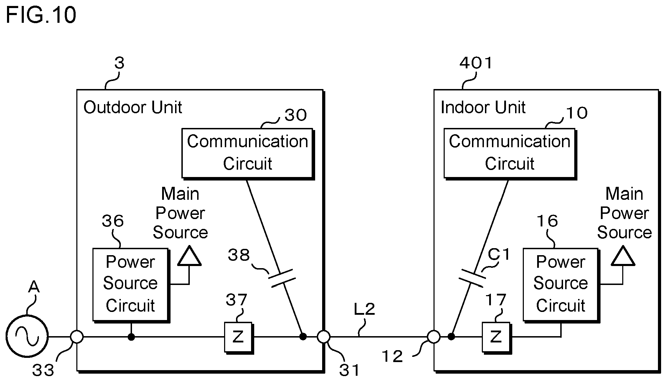

Fig. 10 is a schematic diagram illustrating an example of the configuration of an indoor unit 401 and the outdoor unit 3 according to a fourth embodiment. As described in the first embodiment, the common communication protocol is used for the communication via the communication line L1, the communication via the high-voltage power source line L2, and the communication via the low-voltage power source line L3. Accordingly, providing one communication circuit 10 commonly used for multiple kinds of air conditioning related equipment and appropriately selecting necessary peripheral circuits enables the indoor unit 401 that performs communication only via the high-voltage power source line L2 to be configured. Since the detailed configuration of the circuits composing the indoor unit 401 is the same as or similar to that in the first embodiment, a detailed description of the circuits composing the indoor unit 401 is omitted herein.

The indoor unit 401 according to the fourth embodiment includes the communication circuit 10, the second connection portion 12, the power source circuit 16, the second impedance upper 17, and the capacitor C2. The configuration of the outdoor unit 3 is the same as or similar to the circuit configuration of the outdoor unit 3 described above with reference to Fig. 5. The second connection portion 12 is connected to the communication circuit 10 via the capacitor C2. The second connection portion 12 of the indoor unit 401 is connected to the second connection portion 32 of the outdoor unit 3 via the high-voltage power source line L2.

According to the fourth embodiment, the indoor unit 401 is capable of communicating with the outdoor unit 3 via the high-voltage power source line L2. It is not necessary to provide a dedicated circuit for realizing the communication via the high-voltage power source line L2, and it is possible to compose the indoor unit 401 according to the fourth embodiment using the communication circuit 10 having the common specifications.

### (Fifth embodiment)

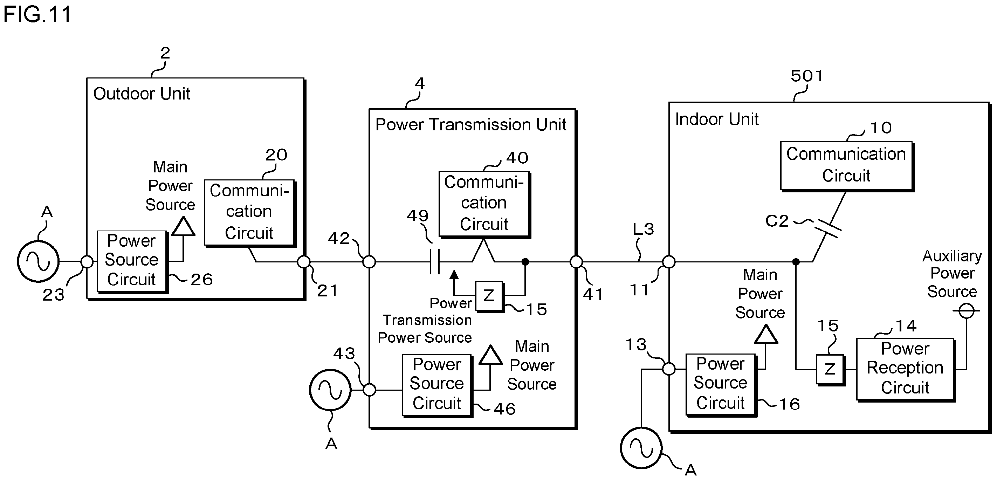

Fig. 11 is a schematic diagram illustrating a first connection example of an indoor unit 501 and the outdoor unit 2 according to a fifth embodiment. As described in the first embodiment, the common communication protocol is used for the communication via the communication line L1, the communication via the high-voltage power source line L2, and the communication via the low-voltage power source line L3. Accordingly, providing one communication circuit 10 commonly used for multiple kinds of air conditioning related equipment and appropriately selecting necessary peripheral circuits enables the indoor unit 501 that performs communication only via the low-voltage power source line L3 to be configured. Since the detailed configuration of the circuits composing the indoor unit 501 is the same as or similar to that in the first embodiment, a detailed description of the circuits composing the indoor unit 501 is omitted herein.

The indoor unit 501 according to the fifth embodiment includes the communication circuit 10, the first connection portion 11, the third connection portion 13, the power source circuit 16, the first impedance upper 15, the power reception circuit 14, and the capacitor C2. The configuration of the outdoor unit 2 is the same as or similar to the circuit configuration of the outdoor unit 2 described above with reference to Fig. 4 and Fig. **6****.** The first connection portion 11 is connected to the communication circuit 10 via the capacitor C2. The configuration of the power transmission unit 4 is the same as or similar to the circuit configuration of the power transmission unit 4 described above with reference to Fig. 6. The first connection portion 11 of the indoor unit 501 is connected to the first connection portion 21 of the outdoor unit 2 via the power transmission unit 4 with the low-voltage power source line L3.

According to the fifth embodiment, the indoor unit 501 is capable of communicating with the outdoor unit 2 via the low-voltage power source line L3. It is not necessary to provide a dedicated circuit for realizing the communication via the low-voltage power source line L3, and it is possible to compose the indoor unit 501 according to the fifth embodiment using the communication circuit 10 having the common specifications.

Although the communication circuits 10 and 20 perform the communication using the multiple signals in the frequency division multiplex system in the first embodiment to the fifth embodiment, the communication circuits 10 and 20 are not limited to this. The communication circuits 10 and 20 may perform the communication using a single signal.

Although the two-core vinyl cabtire round cord (VCTF) is used for the communication line L1 and the low-voltage power source line L3 in the first embodiment to the fifth embodiment, the communication line L1 and the low-voltage power source line L3 are not limited to this. Cables of different kinds including a vinyl cabtire oval cord (VCTFK), a vinyl insulated vinyl cabtire cable (VCT), a vinyl insulated vinyl sheathed round-type cable (VVR), a vinyl insulated vinyl sheathed flat-type cable (VVF), and a control-use vinyl insulated vinyl sheathed cable (CVV) may be used for the communication line L1 and the low-voltage power source line L3. In addition, cords or cables of three or more cores may be used for the communication line L1 and the low-voltage power source line L3.

Although the communication circuits 10 and 20 perform the communication using the signal modulated in the frequency division multiplex system in the band of 2 MHz to 28 MHz in the first embodiment to the fifth embodiment, the communication circuits 10 and 20 are not limited to this. The communication circuits 10 and 20 may perform the communication using the signal modulated in the frequency division multiplex system in a band of 100 kHz or higher.

Although the embodiments are described above, various modifications of the modes and detailed configurations may be available without departing from the spirit and scope of the claims. At least part of the embodiments described above may be arbitrarily combined.

### Reference Signs List

1 indoor unit
2, 3 outdoor unit
4 power transmission unit
10 communication circuit
10a control circuit
10b transmission circuit
10c reception circuit
11 first connection portion
12 second connection portion
13 third connection portion
14 power reception circuit
15 first impedance upper
16 power source circuit
17 second impedance upper
18 noise filter
18a transmission filter
18b reception filter
20 communication circuit
20a control circuit
20b transmission circuit
20c reception circuit
21 first connection portion
22 second connection portion
23 third connection portion
24 power reception circuit
25 first impedance upper
26 power source circuit
27 second impedance upper
28 noise filter
28a transmission filter
28b reception filter
A alternating-current power source
C1 capacitor
C2 capacitor
C3 capacitor
C4 capacitor
L1 communication line
L2 high-voltage power source line
L21 power source line
L22 common line
L23 signal line
L3 low-voltage power source line

## Claims

1. Air conditioning related equipment comprising:
a communication circuit that is communicably connected via at least two of a communication line through which a communication signal is transmitted, a high-voltage power source line through which high-voltage power is transmitted, and a low-voltage power source line through which low-voltage power is transmitted.

2. The air conditioning related equipment according to Claim 1 comprising:
a power source circuit that generates driving power of the communication circuit from the high-voltage power; and
a connection portion to which the communication line is connected,
wherein the communication circuit is connected to the connection portion.

3. The air conditioning related equipment according to Claim 1 or 2 comprising:
a connection portion to which the low-voltage power source line is connected;
a power reception circuit that generates auxiliary power from the low-voltage power to supply the auxiliary power to the communication circuit when the high-voltage power is stopped; and
an impedance upper that is disposed between the connection portion and the power reception circuit and that keeps impedance of the connection portion higher than impedance of the power reception circuit across a frequency band of the communication signal,
wherein the communication circuit is connected to the connection portion.

4. The air conditioning related equipment according to Claim 1 or 2 comprising:
a connection portion to which the high-voltage power source line is connected;
a power source circuit that generates driving power of the communication circuit from the high-voltage power;
an impedance upper that is disposed between the connection portion and the power source circuit and that keeps impedance of the connection portion higher than impedance of the power source circuit across a frequency band of the communication signal; and
an insulation circuit that cuts off the high-voltage power and that transmits the communication signal,
wherein the communication circuit is connected to the connection portion via the insulation circuit.

5. The air conditioning related equipment according to Claim 1 or 2 comprising:
a connection portion to which the high-voltage power source line is connected;
a power source connection portion to which a high-voltage power source is connected;
a power source circuit that generates driving power of the communication circuit from the high-voltage power;
an impedance upper that is disposed between the connection portion and the power source connection portion and that keeps impedance of the connection portion higher than impedance of the power source connection portion across a frequency band of the communication signal; and
an insulation circuit that cuts off the high-voltage power and that transmits the communication signal,
wherein the communication circuit is connected to the connection portion via the insulation circuit.

6. The air conditioning related equipment according to Claim 1 comprising:
a first connection portion to which the communication circuit is connected and to which the communication line or the low-voltage power source line is connected;
a second connection portion to which the high-voltage power source line is connected;
a power source circuit that is connected to the second connection portion and that generates driving power of the communication circuit from the high-voltage power;
an impedance upper that is disposed between the second connection portion and the power source circuit and that keeps impedance of the second connection portion higher than impedance of the power source circuit across a frequency band of the communication signal; and
an insulation circuit that is disposed between the second connection portion and the communication circuit and that cuts off the high-voltage power and transmits the communication signal.

7. The air conditioning related equipment according to Claim 6 comprising:
a power reception circuit that generates auxiliary power from the low-voltage power and that supplies the auxiliary power to the communication circuit when the high-voltage power is stopped; and
an impedance upper that is disposed between the first connection portion and the power reception circuit and that keeps impedance of the first connection portion higher than impedance of the power reception circuit across the frequency band of the communication signal.

8. The air conditioning related equipment according to any of Claims 4 to 7,
wherein the insulation circuit includes a capacitor.

9. The air conditioning related equipment according to any of Claims 1 to 8,
wherein the communication circuit performs communication using multiple signals in a frequency division multiplex system.

10. The air conditioning related equipment according to any of Claims 1 to 9,
wherein the communication circuit performs communication using a signal of a frequency of 100 kHz or higher.

11. The air conditioning related equipment according to any of Claims 1 to 10,
wherein the high-voltage power source line includes a power source line, a common line, and a signal line, and
wherein the high-voltage power is transmitted through the power source line and the common line and the communication circuit performs communication via the signal line and the common line.

12. An air conditioning system comprising:
first air conditioning related equipment according to any of Claims 1 to 11; and
second air conditioning related equipment that is connected to the first air conditioning related equipment via the communication line,
wherein the first air conditioning related equipment communicates with the second air conditioning related equipment via the communication line.

13. An air conditioning system comprising:
first air conditioning related equipment according to any of Claims 1 to 11; and
second air conditioning related equipment that is connected to the first air conditioning related equipment via the low-voltage power source line,
wherein the first air conditioning related equipment communicates with the second air conditioning related equipment via the low-voltage power source line.

14. An air conditioning system comprising:
first air conditioning related equipment according to any of Claims 1 to 11; and
second air conditioning related equipment that is connected to the first air conditioning related equipment via the high-voltage power source line,
wherein the first air conditioning related equipment communicates with the second air conditioning related equipment via the high-voltage power source line.

15. An air conditioning system comprising:
first air conditioning related equipment according to any of Claims 1 to 11;
second air conditioning related equipment that is connected to the first air conditioning related equipment via the high-voltage power source line; and
third air conditioning related equipment that is connected to the first air conditioning related equipment via the low-voltage power source line,
wherein the first air conditioning related equipment communicates with the second air conditioning related equipment via the high-voltage power source line and communicates with the third air conditioning related equipment via the low-voltage power source line.
